# FASCICULE DE BREVET EUROPEEN

(11) **EP 3 214 899 B1**
(45) Date de publication et mention de la délivrance du brevet: **20.11.2019**
(21) Numéro de dépôt: 17157267.0
(22) Date de dépôt: 21.02.2017
(51) Int. Cl.: B60Q 1/14, H05B 33/08, H02M 1/00, B60Q 1/48

(54) **ALIMENTATION ÉLECTRIQUE POUR UN DISPOSITIF LUMINEUX D'UN VÉHICULE AUTOMOBILE COMPRENANT UNE PLURALITÉ DE SORTIES**
ELEKTRISCHE STROMZUFÜHRUNG FÜR EINE LEUCHTVORRICHTUNG EINES KRAFTFAHRZEUGS, DIE EINE VIELZAHL VON AUSGÄNGEN UMFASST
POWER SUPPLY FOR A LIGHT DEVICE OF A MOTOR VEHICLE HAVING A PLURALITY OF OUTPUTS

(30) Priorité: 01.03.2016 FR 1651715
(43) Date de publication de la demande: 06.09.2017
(73) Titulaire: Valeo Vision, 93012 Bobigny Cedex (FR)
(72) Inventeur: BOUDIKIAN, David, 75013 PARIS (FR); JAUREGI, Irantzu, 75020 PARIS (FR); ALVES, Jean-Philippe, 95240 CORMEILLES EN PARISIS (FR); YVON, Sylvain, 16170 MAREUIL (FR); MAZZOUR, Souheil, 75010 PARIS (FR)

(56) Documents cités:
- US-A1- 2004 075 393
- US-A1- 2005 269 968
- US-A1- 2012 025 722

## Description

L'invention a trait au domaine des dispositifs de pilotage de l'alimentation électrique de sources lumineuses, plus particulièrement dans le domaine des véhicules automobiles.

Il devient de plus en plus courant d'utiliser des sources lumineuses à élément semi-conducteur, telles que des diodes électroluminescentes, LEDs, pour réaliser différentes fonctions lumineuses d'un véhicule automobile. Ces fonctions peuvent par exemple inclure les feux diurnes, les feux de position, les indicateurs de direction ou les feux de croisement. De manière connue, un dispositif de pilotage de l'alimentation électrique est nécessaire pour alimenter un groupe de LEDs réalisant une fonction lumineuse donnée. Un tel dispositif de pilotage comprend en général un convertisseur de tension qui, à partir d'une tension continue d'entrée fournie par une source interne au véhicule, telle qu'une batterie, est apte à générer une tension de sortie de valeur appropriée à l'alimentation du groupe de LEDs. Une LED émet de la lumière lorsqu'une tension d'au moins une valeur seuil, appelée tension directe, est appliquée à ses bornes.

Des convertisseurs connus comprennent des convertisseurs de type SEPIC (de l'anglais « Single-Ended Primary Inductor Converter »), Flyback, élévateur de tension (« boost ») ou abaisseur de tension (« buck »). De tels convertisseurs font intervenir un élément interrupteur, tel qu'un transistor, dont l'état est périodiquement commuté entre les valeurs ouvertes et fermées. La fréquence de découpage appliquée à l'interrupteur influence la valeur de la tension de sortie.

Comme des fonctions lumineuses différentes requièrent des intensités lumineuses différentes, il va de soi que les besoins de tension d'alimentation et de courant varient entre les différentes fonctions lumineuses réalisées par un dispositif lumineux d'un véhicule automobile. Afin de satisfaire à ces besoins, il est connu de mettre à disposition des circuits convertisseurs multiples, chaque circuit convertisseur réalisant une des tensions de sorties et de courant requises. Cette solution est toutefois onéreuse et engendre une perte d'espace importante dans le milieu restreint d'un dispositif lumineux pour un véhicule automobile. Alternativement, il est connu de faire fonctionner un convertisseur donné en deux régimes différents en alternance selon le principe du partage dans le temps (« time sharing »). Cette solution nécessite cependant un circuit de contrôle complexe et peut avoir des conséquences néfastes sur la durée de vie des sources lumineuses alimentées.

On connait également du document US2012/025722 A1 un dispositif électrique pouvant alimenter alternativement un premier groupe de sources et un deuxième groupe de sources, un transistor permettant de contrôler le passage de l'alimentation d'un groupe de sources à l'autre.

L'invention a pour objectif de pallier à au moins un des problèmes posés par l'art antérieur. Plus précisément, l'invention a pour objectif de proposer un dispositif lumineux pour véhicule automobile comprenant au moins deux groupes de sources lumineuses réalisant au moins deux faisceaux lumineux différents et comprenant un dispositif de pilotage de l'alimentation électrique qui, à l'aide d'un circuit convertisseur à découpage unique, permet de réaliser des sorties d'alimentation à plusieurs niveaux de tension pour piloter l'alimentation électrique des deux groupes de sources.

L'invention a pour objet un dispositif lumineux pour véhicule automobile comprenant au moins deux groupes de sources lumineuses réalisant au moins deux faisceaux lumineux différents, comprenant un dispositif de pilotage de l'alimentation électrique de l'au moins deux groupes de sources lumineuses, le dispositif de pilotage comprenant un circuit convertisseur de tension à découpage, ledit circuit convertisseur comprenant des moyens destinés à générer un signal de tension commuté à partir d'une tension d'entrée continue. Le dispositif comprend des moyens de sortie primaires destinés à convertir ledit signal de tension commuté en une tension de sortie continue ayant un premier niveau de tension et destinés à alimenter un premier groupe de sources lumineuses. Le dispositif comprend des moyens de sortie secondaires destinés à convertir ledit signal de tension commuté en au moins une deuxième tension de sortie continue ayant un deuxième niveau de tension et destinés à alimenter un deuxième groupe de sources lumineuses.

Les moyens de sortie secondaires comprennent un circuit électronique comprenant des capacités et des diodes et qui ne comprend pas d'élément de commutation et/ou de circuit intégré et/ou d'élément microcontrôleur.

Les moyens de sortie secondaires comprennent des moyens de régulation linéaires du courant électrique de sortie, formés par un régulateur de courant linéaire complémentant la sortie secondaire.

Le deuxième niveau de tension est supérieur au premier niveau de tension.

Le dispositif lumineux est remarquable en ce que le premier groupe de sources lumineuses, réalisant tout ou partie d'une première fonction lumineuse, est alimenté par la première tension de sortie et en ce que le deuxième groupe de sources lumineuses, réalisant tout ou partie d'une deuxième fonction lumineuse, est alimenté par une deuxième tension de sortie du dispositif de pilotage et en ce qu'il comprend au moins un interrupteur régissant le branchement du premier groupe de sources lumineuses vers la première tension de sortie et un interrupteur régissant le branchement du deuxième groupe de sources lumineuses vers la première tension de sortie, et en ce que tout ou partie de la deuxième fonction lumineuse est alimentée par la sortie secondaire du dispositif de pilotage, tandis que tout ou partie de la première fonction lumineuse est alimentée par la sortie primaire lorsque l'au moins un interrupteur régissant le branchement du premier groupe de sources lumineuses est fermé et l'interrupteur régissant le branchement du deuxième groupe de sources lumineuses est ouvert et le régulateur de courant linéaire connecte les moyens de sortie secondaire au deuxième groupe de sources lumineuses.

De préférence, les moyens de sortie secondaires peuvent comprendre un circuit électronique qui est composée de capacités et de diodes, et optionnellement de résistances.

De préférence, les moyens de sortie secondaires du dispositif de pilotage peuvent mettre à disposition plusieurs tensions de sorties continues à partir du signal de tension commuté, les niveaux de ces tensions de sorties étant supérieurs au premier niveau de tension.

Le signal commuté peut de préférence alterner entre deux valeurs de tensions différentes.

De préférence, une des deux valeurs de tension peut être nulle.

Le circuit convertisseur peut de préférence être un convertisseur à découpage, notamment un circuit de type SEPIC, flyback, abaisseur de tension (buck) ou élévateur de tension (boost)
Le circuit convertisseur peut de préférence comprendre une première partie qui génère un signal de tension commuté.

Le circuit convertisseur peut de préférence comprendre un élément de commutation réalisant la fonction de découpage de tension. Il s'agit de préférence d'un transistor. Les moyens de sortie secondaires peuvent de préférence convertir le signal commuté qui est généré sur la borne drain du transistor. Alternativement, les moyens de sortie secondaires peuvent convertir un signal commuté qui est réalisé sur l'anode d'une diode du circuit convertisseur.

De préférence, les deux faisceaux lumineux peuvent réaliser des fonctions photométriques réglementaires distinctes. Alternativement, les deux faisceaux lumineux peuvent participer à la réalisation d'une même fonction photométrique réglementaire.

Les fonctions lumineuses peuvent de préférence comprendre les fonctions feux de position et feux de croisement.

De préférence, les sources lumineuses peuvent comprendre des diodes électroluminescentes, LED, des diodes de puissance, ou des diodes laser.

En utilisant les mesures selon la présente invention, il devient possible d'alimenter en électricité des groupes de sources lumineuses réalisant différentes fonctions lumineuses et nécessitant des tensions électriques différentes, à l'aide d'un convertisseur à découpage unique. La provision d'au moins une sortie supplémentaire à tension plus élevée que la tension de sortie principale du convertisseur de découpage permet une flexibilité accrue lors de la conception de dispositifs lumineux pour véhicule automobile. Comme la solution proposée par l'invention ne fait intervenir que des composants électroniques simples et des circuits électroniques peu complexes, son coût de réalisation est faible. Comparée à des solutions existantes, la solution proposée permet de réduire le besoin d'espace pour des dispositifs de pilotage de l'alimentation de plusieurs groupes de sources lumineuses nécessitant des sorties à tensions différentes.

D'autres caractéristiques et avantages de la présente invention seront mieux compris à l'aide de la description exemplaire et des dessins parmi lesquels :
- la figure 1 illustre de manière schématique un dispositif de pilotage de l'alimentation électrique selon l'invention dans un mode de réalisation préféré ;
- la figure 2 montre un exemple d'un circuit convertisseur de type SEPIC, tel qu'il intervient dans un mode de réalisation préféré de l'invention ;
- la figure 3 montre un exemple d'un circuit convertisseur de type flyback, tel qu'il intervient dans un mode de réalisation préféré de l'invention ;
- la figure 4 montre un exemple d'un circuit convertisseur de type boost, tel qu'il intervient dans un mode de réalisation préféré de l'invention ;
- la figure 5 montre un exemple d'un circuit convertisseur de type buck, tel qu'il intervient dans un mode de réalisation préféré de l'invention ;
- la figure 6a montre un exemple de circuit réalisant des moyens de sorties secondaires dans un mode de réalisation préféré de l'invention ;
- la figure 6b indique l'allure de la tension de sortie réalisée à l'aide du circuit de la figure 6a moyennant un signal de tension d'entrée commuté ;
- la figure 7a montre un exemple de circuit réalisant des moyens de sorties secondaires dans un mode de réalisation préféré de l'invention ;
- la figure 7b indique l'allure de la tension de sortie réalisée à l'aide du circuit de la figure 7a moyennant un signal de tension d'entrée commuté ;
- la figure 8a montre un exemple de circuit réalisant des moyens de sorties secondaires dans un mode de réalisation préféré de l'invention ;
- la figure 8b indique l'allure de la tension de sortie réalisée à l'aide du circuit de la figure 8a moyennant un signal de tension d'entrée commuté ;
- la figure 9a montre un exemple de circuit réalisant des moyens de sorties secondaires dans un mode de réalisation préféré de l'invention ;
- la figure 9b indique l'allure de la tension de sortie réalisée à l'aide du circuit de la figure 9a moyennant un signal de tension d'entrée commuté ;
- la figure 10a montre un exemple de circuit réalisant des moyens de sorties secondaires dans un mode de réalisation préféré de l'invention ;
- la figure 10b indique l'allure de la tension de sortie réalisée à l'aide du circuit de la figure 10a moyennant un signal de tension d'entrée commuté ;
- la figure 11a montre un exemple de circuit réalisant des moyens de sorties secondaires dans un mode de réalisation préféré de l'invention ;
- la figure 11b indique l'allure de la tension de sortie réalisée à l'aide du circuit de la figure 11a moyennant un signal de tension d'entrée commuté ;
- la figure 12a montre un mode de réalisation préféré d'un dispositif de pilotage de l'alimentation conforme à l'invention ;
- la figure 12b indique les première et deuxièmes niveaux de tension de sortie réalisés à l'aide du dispositif de la figure 12a, ainsi que l'allure du signal de tension commuté ;
- la figure 13 montre un mode de réalisation préféré d'un dispositif lumineux selon l'invention pour un véhicule automobile.

Dans la description qui suit, des numéros de référence similaires seront utilisés pour décrire des concepts similaires à travers des modes de réalisation différents de l'invention. Ainsi, les numéros 100, 800 et 900 décrivent un dispositif de pilotage de l'alimentation électrique dans trois modes de réalisation différents conformes à l'invention.

Des éléments bien connus dans l'état de l'art en rapport avec le fonctionnement d'un dispositif de pilotage de l'alimentation électrique ou un dispositif lumineux pour véhicules automobile, et n'ayant aucun impact direct par rapport à la présente invention, ne seront pas décrits en détails dans le cadre de la présente description par souci de clarté de l'exposé.

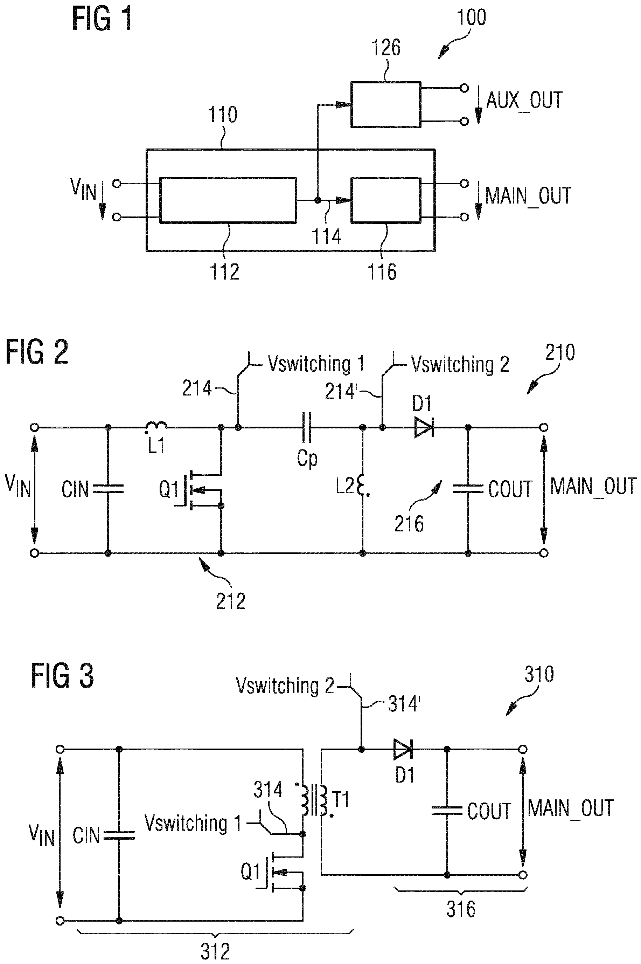

La figure 1 montre de manière schématique l'architecture proposée selon un premier mode de réalisation préféré. Un dispositif 100 de pilotage de l'alimentation électrique d'au moins deux groupes de sources lumineuses d'un véhicule automobile est montré. Les sources lumineuses peuvent de manière non limitative être des diodes électroluminescentes, LED. Le dispositif comprend un circuit convertisseur de tension à découpage indiqué par le numéro de référence 110. Le circuit convertisseur 110 est apte à convertir une tension d'entrée V_{IN} en une tension de sortie primaire MAIN_OUT moyennant des moyens 112 aptes qui génèrent un signal de tension commuté 114, et des moyens de sortie primaires 116, qui convertissent le signal de tension commuté en une tension continue de valeur différente de V_{IN}. Le premier niveau de sortie MAIN_OUT est destiné à alimenter un premier groupe de sources lumineuses, dont le besoin en tension électrique est plus faible que le niveau de sortie secondaire AUX_OUT II peut par exemple s'agir d'un groupe de sources lumineuses réalisant la fonction lumineuse feux de croisement. Le dispositif 100 comprend également des moyens de sortie secondaires 126, qui convertissent le signal de tension commuté 114 repris au sein du circuit convertisseur 110, en une deuxième tension de sortie AUX_OUT plus élevée que la tension MAIN_OUT. Plusieurs sorties AUX_OUT à tensions différentes peuvent être mises à disposition à l'aide des moyens de sortie secondaires 126 sans pour autant sortir du cadre de la présente invention. Les moyens de sortie secondaires ne font pas intervenir des éléments interrupteurs, mais uniquement des capacités et des diodes, limitant ainsi la complexité de la solution proposée.

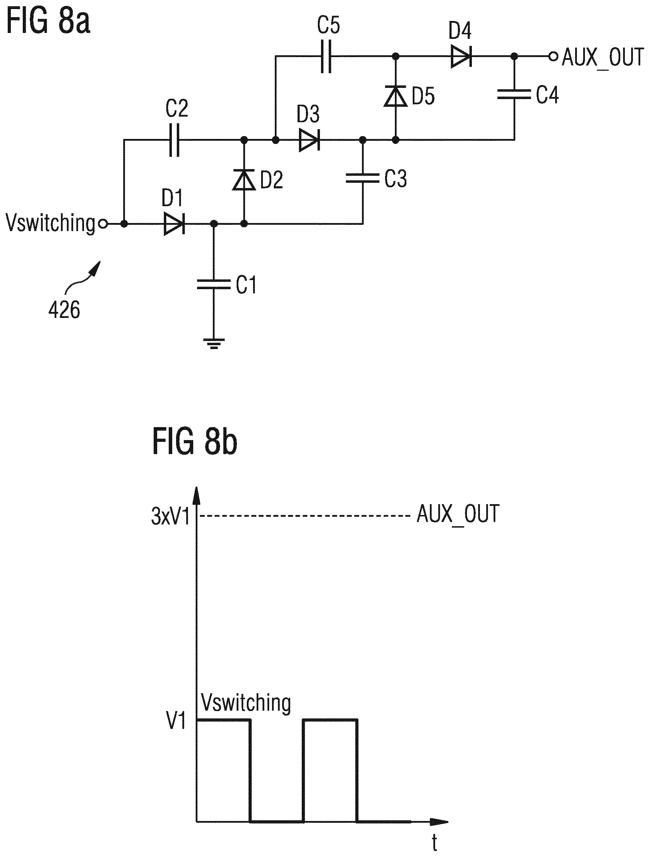

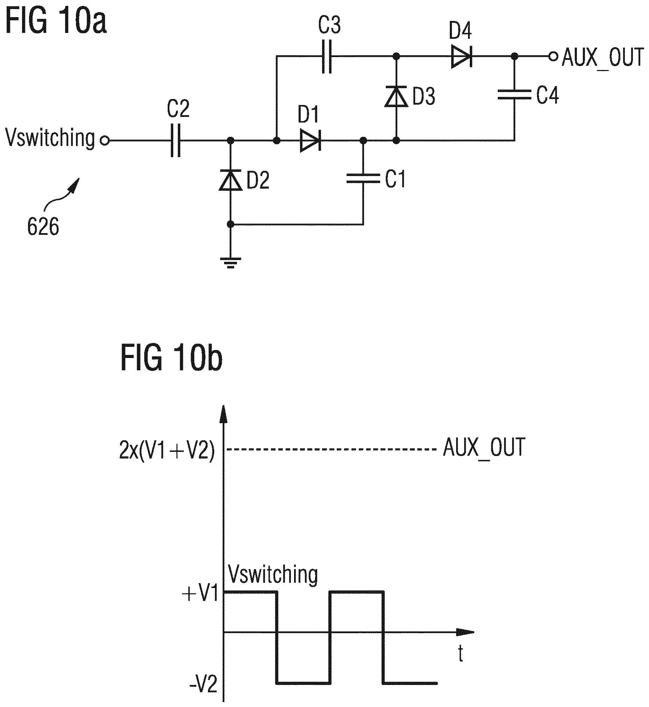

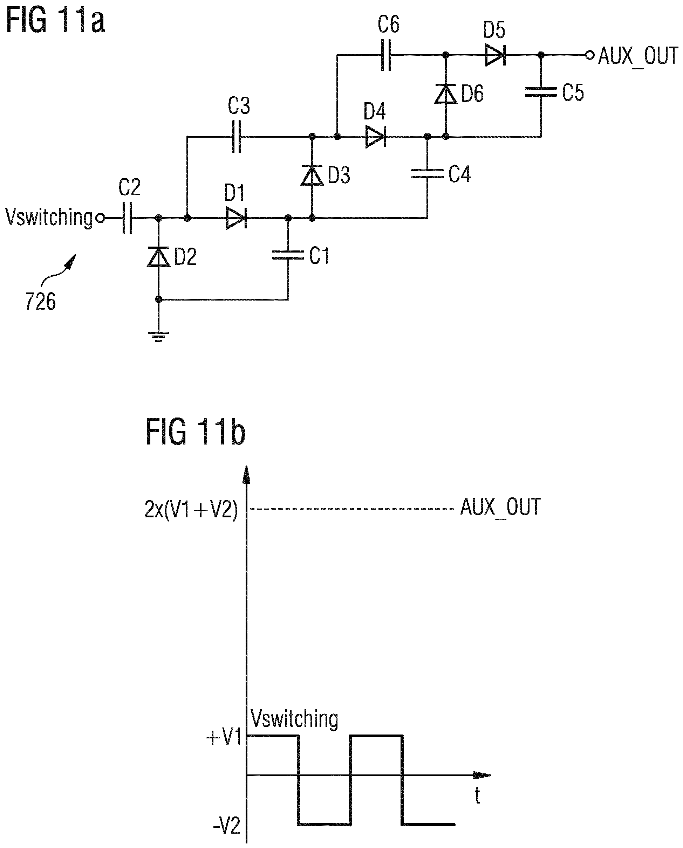

Différents modes de réalisation sont envisageables pour le circuit convertisseur 110 ainsi que pour les moyens de sortie secondaires 126. Des modes de réalisation préférés de ces composants seront décrits à titre non limitatif dans ce qui suit, et à l'aide des figures 2 à 11. Les différents modes de réalisation sont annotés en incrémentant les numéros de cent en passant d'un mode de réalisation à l'autre. Ainsi, le circuit convertisseur 110 dans l'architecture de la figure 1 peut être réalisé par les convertisseurs 210, 310, 410 etc...

La figure 2 montre un schéma d'un convertisseur 210 de type SEPIC. Le convertisseur SEPIC, qui vient de l'acronyme anglais relié à l'expression «single ended primary inductor converter» est une alimentation à découpage qui sert à convertir une première tension continue V_{IN} en une deuxième tension continue MAIN_OUT, de valeur différente, plus importante que la première tension continue. La valeur de la tension de sortie dépend du rapport cyclique de fermeture de l'interrupteur Q1, montré ici comme un transistor, par exemple de type MOSFET. Lorsque l'interrupteur est ouvert, les deux inductances L1 et L2 alimentent le circuit de charge en courant à travers la diode D1. Lorsque l'interrupteur est fermé, la source de tension charge l'inductance L1 tandis que la première capacité Cp charge la deuxième inductance L2. Le circuit de charge est alors alimenté en courant par la deuxième capacité COUT. Il est également possible de remplacer les deux inductances L1 et L2 par deux inductances couplées sur le même circuit magnétique.

Une première partie 212 du convertisseur génère un signal de tension commuté 214, qui, dans le dispositif selon l'invention, est repris par les moyens de sortie secondaires décrits plus haut sur la borne drain du transistor Q1. Lorsque les valeurs des inductances L1 et L2 sont identiques, le signal 214 alterne entre les niveaux de tension MAIN_OUT+ V_{IN} et 0. Alternativement, les moyens de sortie secondaires peuvent reprendre le signal de tension commuté 214' sur l'anode de la diode D1. Ce signal 214' alterne entre les niveaux de tension MAIN_OUT et - V_{IN}. Une deuxième partie 216 du convertisseur génère le niveau de tension continue MAIN OUT.

La figure 3 montre un schéma d'un convertisseur 310 de type flyback. Le convertisseur flyback comprend un transformateur T1 sous forme d'inductances couplées. Le transformateur primaire est caractérisé par un nombre de spires n1, tandis que le nombre de spires du transformateur secondaire est donné par n2. Une première partie 312 du convertisseur génère un signal de tension commuté 314, qui, dans le dispositif selon l'invention, est repris par les moyens de sortie secondaires décrits plus haut sur la borne drain du transistor Q1. Le signal 314 alterne entre les niveaux de tension (n2/n1)MAIN_OUT et 0. Alternativement, les moyens de sortie secondaires peuvent reprendre le signal de tension commuté 314' sur l'anode de la diode D1. Ce signal 314' alterne entre les niveaux de tension MAIN_OUT et -(n2/n1) V_{IN}. Une deuxième partie 316 du convertisseur génère le niveau de tension continue MAIN_OUT.

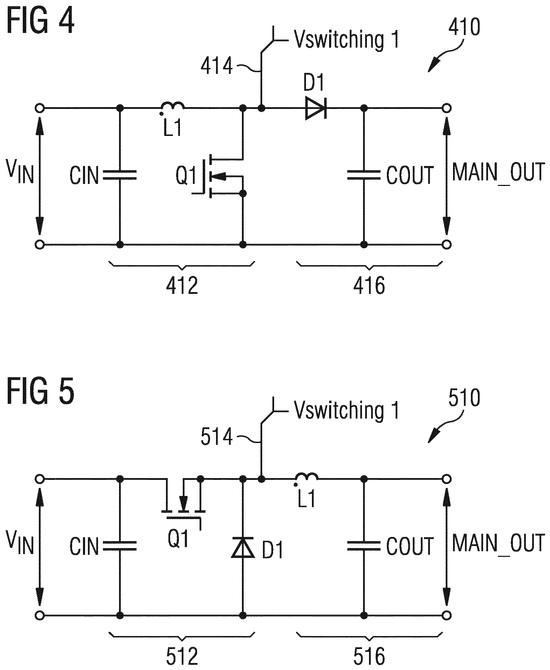

La figure 4 montre un schéma d'un convertisseur 410 de type élévateur de tension, ou boost. Une première partie 412 du convertisseur génère un signal de tension commuté 414, qui, dans le dispositif selon l'invention, est repris par les moyens de sortie secondaires décrits plus haut sur la borne drain du transistor Q1. Le signal 414 alterne entre les niveaux de tension MAIN_OUT et 0. Une deuxième partie 416 du convertisseur génère le niveau de tension continue MAIN_OUT.

La figure 5 montre un schéma d'un convertisseur 510 de type abaisseur de tension, ou buck. Une première partie 512 du convertisseur génère un signal de tension commuté 514, qui, dans le dispositif selon l'invention, est repris par les moyens de sortie secondaires décrits plus haut sur la borne drain du transistor Q1. Le signal 514 alterne entre les niveaux de tension V_{IN} et 0. Une deuxième partie 516 du convertisseur génère le niveau de tension continue MAIN OUT.

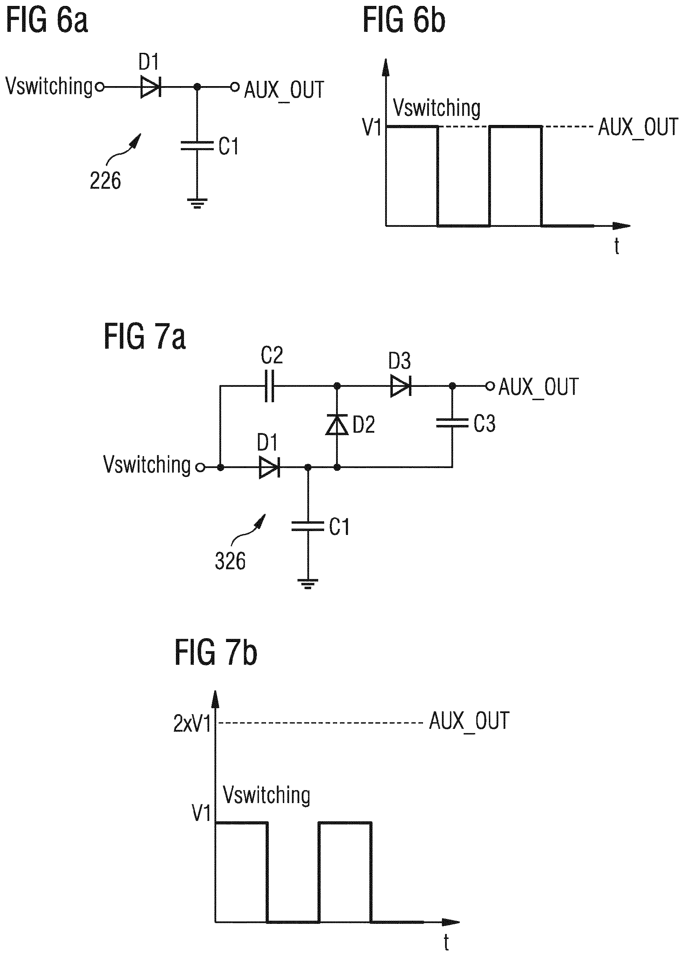

Les figures 6 à 11 illustrent des exemples de circuits électroniques qui réalisent la fonction des moyens de sorties secondaires 126 de l'architecture montrée en figure 1. La référence « Vswitching » indique le signal d'entrée des moyens de sorties secondaires, qui correspond au signal de tension commuté généré par le circuit convertisseur. Les figures 6a-8a sont des exemples de circuits 226, 326, 426 adaptés à être utilisés lorsque le signal de tension commuté repris au sein du circuit convertisseur alterne entre une première valeur de tension non nulle et la valeur 0. Les figures 6b-8b donnent l'allure et la valeur de la deuxième tension de sortie réalisable à l'aide des circuits respectifs. Il va de soi que d'autres circuits électroniques sont envisageables et à la portée de l'homme du métier, sans pour autant sortir du cadre de la présente invention. L'implémentation spécifique dépend des besoins d'applications, notamment en termes valeurs concrètes de tensions électriques requises.

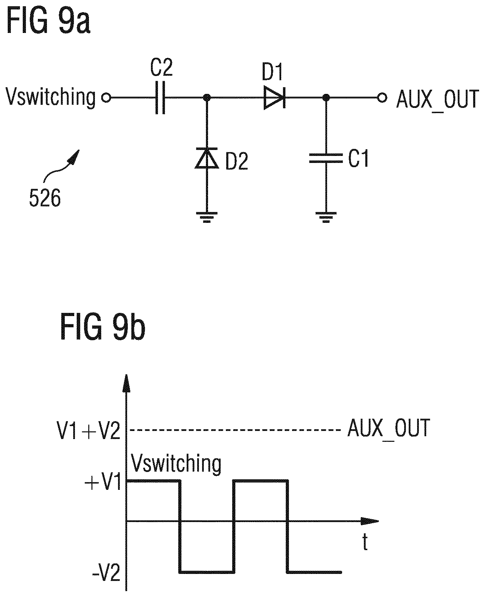

De même, les figures 9a-11a sont des exemples de circuits 526, 626, 726 adaptés à être utilisés lorsque le signal de tension commuté repris au sein du circuit convertisseur alterne entre une première valeur de tension positive et une deuxième valeur de tension négative. Les figures 9b-11b donnent l'allure et la valeur de la deuxième tension de sortie réalisable à l'aide des circuits respectifs. Il va de soi que d'autres circuits électroniques sont envisageables et à la portée de l'homme du métier, sans pour autant sortir du cadre de la présente invention.

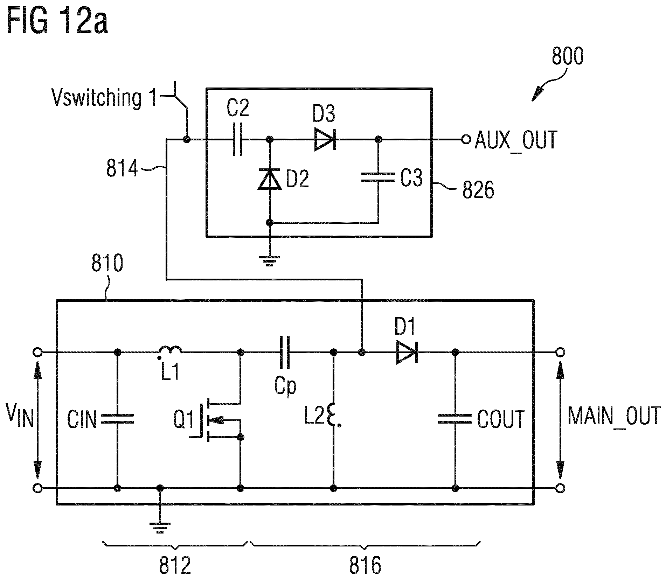

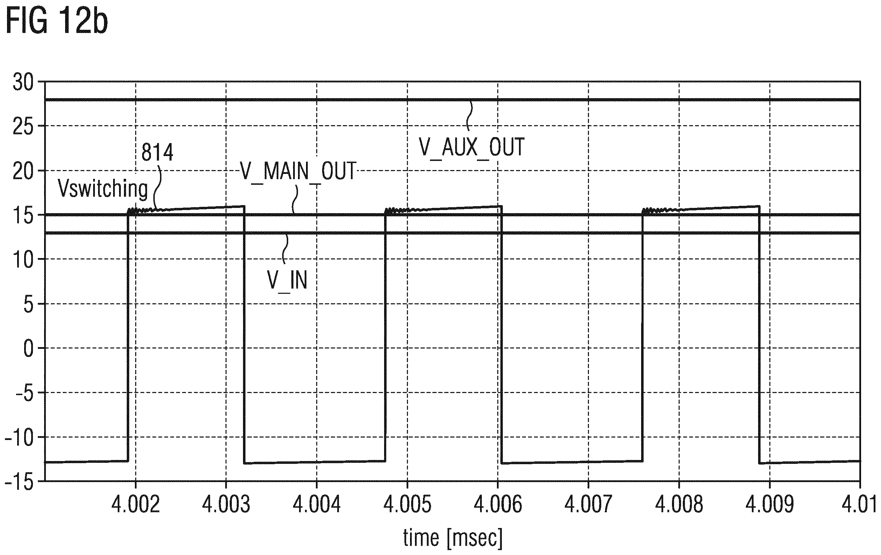

Un exemple de combinaison entre un circuit convertisseur tel qu'il vient d'être décrit et d'un circuit électronique réalisant les moyens de sorties secondaires tels qu'ils viennent d'être décrits est illustré à titre non limitatif par la figure 12a. Le dispositif de pilotage de l'alimentation de sources lumineuses 800 comprend un circuit convertisseur 810 de type SEPIC. Une première partie 812 du circuit convertisseur génère un signal de tension commuté, 814 sur l'anode de la diode D1. Une deuxième partie 816 du circuit convertisseur convertit le signal 814 en tension continue de sortie primaire MAIN_OUT. A titre d'exemple, la tension d'entrée du convertisseur 810 équivaut à V_{IN} =13.5V. Le signal de tension commuté 814 alterne entre la valeur MAIN_OUT (15V) et la valeur - V_{IN}. Ce signal est repris comme entrée des moyens de sortie secondaires 826, qui mettent à disposition un deuxième niveau de haute tension de sortie AUX_OUT à 28,5V, équivalent à V_{IN} +MAIN_OUT. L'évolution temporelle des signaux de tension respectifs sont illustrés sur le graphique de la figure 12b.

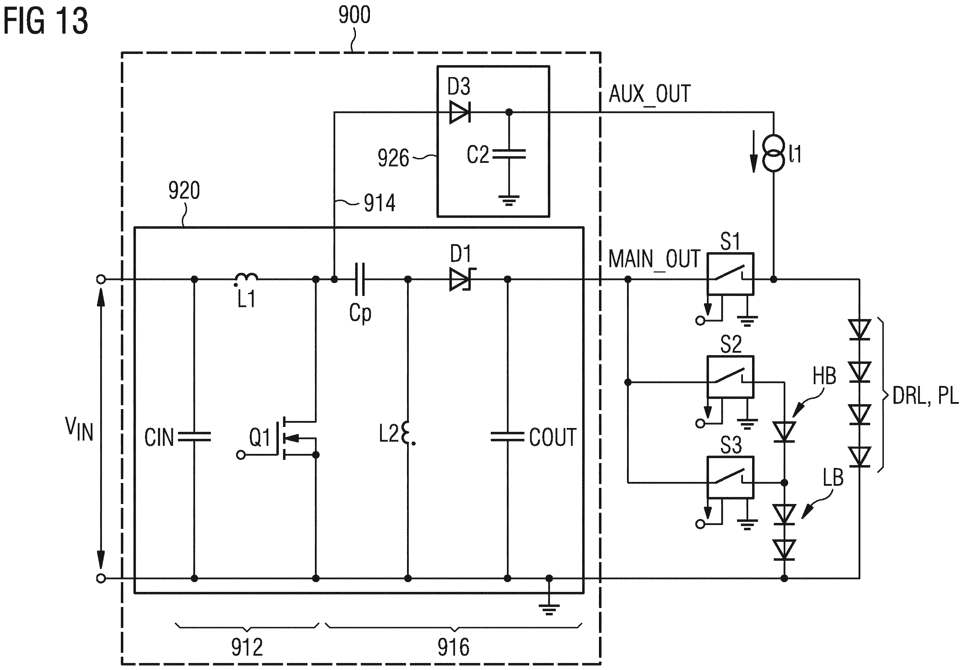

La figure 13 montre un exemple d'un dispositif lumineux pour un véhicule automobile comprenant un dispositif de pilotage de l'alimentation électrique 900 de plusieurs groupes de sources lumineuses à élément semi-conducteur conforme à l'invention. Le circuit convertisseur 910 comprend une première partie 912 qui génère un signal de tension commuté 914, ainsi qu'une deuxième partie 916 qui, à partir du signal de tension commuté 914, génère le niveau de tension de sortie primaire MAIN_OUT. Le signal de tension commuté 914 est repris par les moyens de sortie secondaires 926, qui le convertissent en niveau de tension de sortie secondaire AUX OUT. La sortie secondaire est complémentée par un régulateur de courant linéaire I1. Le dispositif 900 illustré permet notamment, à l'aide d'un circuit convertisseur 910 unique, d'alimenter trois groupes de sources lumineuses distinctes d'un véhicule automobile, réalisant une pluralité de fonctions lumineuses. Un premier groupe de sources lumineuses indiqué par LB réalise la fonction feux de croisement (« low beam »). Un deuxième groupe de sources lumineuses, HB, réalise la fonction feux de route (« high beam »). Un troisième groupe de sources lumineuses, DRL/PL, réalise les fonctions feux diurnes (« daytime running light ») ou feux de position (« position light ») en fonction de l'intensité du courant électrique qui travers ce groupe de sources lumineuses. Une pluralité d'interrupteurs S1, S2, S3 régit le branchement des différents groupes de sources lumineuses vers la charge du dispositif 910. Les interrupteurs sont commandés de manière connue par un élément microcontrôleur non-illustré et programmé à cet effet.

En mode de fonctionnement feux diurnes, l'interrupteur S1 est fermé, S2 est fermé et S3 est ouvert. Le régulateur de courant linéaire I1 linéaire n'est pas en marche et le groupe DRL/PL est alimenté par la sortie MAIN_OUT.

En mode de fonctionnement feux de croisement et feux de position (LB+PL), l'interrupteur S3 est fermé, tandis que S1 et S2 sont ouverts et le régulateur de courant linéaire I1 connecte AUX_OUT à la branche de sources lumineuses DRL/PL. La fonction feux de position est alimentée par la sortie secondaire du dispositif 900, tandis que la fonction feux de croisement est alimentée par la sortie primaire MAIN_OUT.

En mode de fonctionnement feux de croisement et feux de route et feux de position (LB+HB+PL), l'interrupteur S2 est fermé, tandis que S1 et S3 sont ouverts et le régulateur de courant linéaire I1 connecte AUX_OUT à la branche de sources DRL/PL. La fonction feux de position est alimentée par le sortie secondaire du dispositif 900, tandis que la fonction combinée feux de croisement/feux de route est alimentée par la sortie primaire MAIN_OUT.

A l'aide de la description qui vient d'être donnée, l'homme du métier saura réaliser d'autres implémentations amenant l'effet qui vient d'être décrit, sans pour autant sortir du cadre de l'invention, qui est déterminé par l'étendue des revendications ci-jointes.

## Revendications

1. Dispositif lumineux pour véhicule automobile comprenant au moins deux groupes de sources lumineuses réalisant au moins deux faisceaux lumineux différents, comprenant un dispositif (100, 800, 900) de pilotage de l'alimentation électrique de l'au moins deux groupes de sources lumineuses
le dispositif (100, 800, 900) de pilotage comprenant
- un circuit convertisseur de tension à découpage (110, 210, 310, 410, 510, 610, 710, 810, 910), ledit circuit convertisseur comprenant des moyens (112, 212, 312, 412, 512, 612, 712, 812, 912) destinés à générer un signal de tension commuté (114, 214, 314, 414, 514, 614, 714, 814, 914) à partir d'une tension d'entrée continue,
- des moyens de sortie primaires (116, 216, 316, 416, 516, 616, 716, 816, 916) destinés à convertir ledit signal de tension commuté (114, 214, 314, 414, 514, 614, 714, 814, 914) en une première tension de sortie continue ayant un premier niveau de tension et destinés à alimenter un premier groupe de sources lumineuses,
- des moyens de sortie secondaires (126, 226, 326, 426, 526, 626, 726, 826, 926) destinés à convertir ledit signal de tension commuté (114, 214, 314, 414, 514, 614, 714, 814, 914) en au moins une deuxième tension de sortie continue ayant un deuxième niveau de tension et destinés à alimenter un deuxième groupe de sources lumineuses,
les moyens de sortie secondaires (126, 226, 326, 426, 526, 626, 726, 826, 926) comprennent un circuit électronique comprenant des capacités et des diodes et qui ne comprend pas d'élément de commutation et/ou de circuit intégré et/ou d'élément microcontrôleur,
les moyens de sortie secondaires (126, 226, 326, 426, 526, 626, 726, 826, 926) comprennent des moyens de régulation linéaires du courant électrique de sortie, formés par un régulateur de courant linéaire (l1) complémentant la deuxième tension de sortie, le deuxième niveau de tension est supérieur au premier niveau de tension,
le dispositif lumineux étant **caractérisé en ce que** le premier groupe de sources lumineuses, réalisant tout ou partie d'une première fonction lumineuse, est alimenté par la première tension de sortie et **en ce que** le deuxième groupe de sources lumineuses, réalisant tout ou partie d'une deuxième fonction lumineuse, est alimenté par la deuxième tension de sortie du dispositif de pilotage **en ce qu'**il comprend au moins un interrupteur (S2, S3) régissant le branchement du premier groupe de sources lumineuses vers la première tension de sortie et un interrupteur (S1) régissant le branchement du deuxième groupe de sources lumineuses vers la première tension de sortie,
et **en ce que** tout ou partie de la deuxième fonction lumineuse est alimentée par la deuxième tension de sortie du dispositif (100, 800, 900) de pilotage, tandis que tout ou partie de la première fonction lumineuse est alimentée par la première tension de sortie lorsque l'au moins un interrupteur (S2, S3) régissant le branchement du premier groupe de sources lumineuses est fermé et l'interrupteur (S1) régissant le branchement du deuxième groupe de sources lumineuses est ouvert et le régulateur de courant linéaire (l1) connecte les moyens de sortie secondaire (126, 226, 326, 426, 526, 626, 726, 826, 926) au deuxième groupe de sources lumineuses.

2. Dispositif lumineux selon la revendication précédente, **caractérisé en ce que** les moyens de sortie secondaires (126, 226, 326, 426, 526, 626, 726, 826, 926) du dispositif de pilotage (100, 800, 900) mettent à disposition plusieurs tensions de sorties continues à partir du signal de tension commuté, les niveaux de ces tensions de sorties étant supérieurs au premier niveau de tension.

3. Dispositif lumineux selon une des revendications 1 à 2, **caractérisé en ce que** ledit signal de tension commuté (114, 214, 314, 414, 514, 614, 714, 814, 914) alterne entre deux valeurs de tensions différentes.

4. Dispositif lumineux selon la revendication 3, **caractérisé en ce que** une des deux valeurs de tension est nulle.

5. Dispositif lumineux selon une des revendications 1 à 4, **caractérisé en ce que** le circuit convertisseur est un convertisseur à découpage, notamment un circuit de type SEPIC, flyback, abaisseur de tension (buck) ou élévateur de tension (boost).

6. Dispositif lumineux selon l'une des revendications précédentes, **caractérisé en ce que** les fonctions lumineuses comprennent les fonctions feux de position et feux de croisement.

7. Dispositif lumineux selon l'une des revendications précédentes, **caractérisé en ce que** les sources lumineuses comprennent des diodes électroluminescentes, LED, des diodes de puissance, ou des diodes laser.

## Patentansprüche

1. Beleuchtungsvorrichtung für Kraftfahrzeuge mit mindestens zwei Gruppen von Lichtquellen, die mindestens zwei verschiedene Lichtstrahlen erzeugen, umfassend eine Vorrichtung (100, 800, 900) zum Steuern der elektrischen Versorgung der mindestens zwei Gruppen von Lichtquellen.
die Lenkeinrichtung (100, 800, 900) umfasst
- eine Schaltspannungswandlerschaltung (110, 210, 310, 410, 510, 610, 710, 710, 710, 810, 810, 810, 910), wobei die Wandlerschaltung Mittel (112, 212, 312, 412, 512, 612, 712, 812, 912) zum Erzeugen eines geschalteten Spannungssignals (114, 214, 314, 414, 514, 614, 714, 814, 914) aus einer DC-Eingangsspannung aufweist,
- primäre Ausgabemittel (116, 216, 316, 316, 316, 416, 516, 516, 516, 616, 716, 816, 816, 816, 916) zum Umwandeln des geschalteten Spannungssignals (114, 214, 314, 414, 514, 614, 714, 814, 914) in eine erste Gleichspannung mit einem ersten Spannungspegel und zum Zuführen einer ersten Gruppe von Lichtquellen,
- sekundäre Ausgabemittel (126, 226, 326, 326, 326, 426, 526, 626, 726, 826, 826, 826, 926) zum Umwandeln des geschalteten Spannungssignals (114, 214, 314, 414, 514, 614, 714, 814, 914) in mindestens eine zweite Gleichspannung mit einem zweiten Spannungspegel und zum Zuführen einer zweiten Lichtquellengruppe,
die sekundären Ausgabemittel (126, 226, 326, 326, 426, 526, 526, 626, 726, 826, 826, 826, 926) eine elektronische Schaltung mit Kondensatoren und Dioden beinhalten und die kein Schaltelement und/oder eine integrierte Schaltung und/oder ein Mikrocontrollerelement beinhalten,
die sekundären Ausgabemittel (126, 226, 326, 326, 426, 526, 526, 626, 726, 826, 826, 826, 926) lineare Mittel zum Regeln des elektrischen Ausgangsstroms beinhalten, die durch einen linearen Stromregler (l1) gebildet werden, der die zweite Ausgangsspannung ergänzt,
der zweite Spannungspegel höher ist als der erste Spannungspegel,
wobei die Beleuchtungsvorrichtung **dadurch gekennzeichnet ist, dass** die erste Gruppe von Lichtquellen, die eine erste Lichtfunktion ganz oder teilweise ausführen, von der ersten Ausgangsspannung versorgt wird, und dass die zweite Gruppe von Lichtquellen, die eine zweite Lichtfunktion ganz oder teilweise ausführt, von der zweiten Ausgangsspannung der Steuervorrichtung versorgt wird,
die Steuervorrichtung (100, 800, 900) mindestens einen Schalter (S2, S3) zum Verbinden der ersten Lichtquellengruppe mit der ersten Ausgangsspannung und einen Schalter (S1) zum Verbinden der zweiten Lichtquellengruppe mit der ersten Ausgangsspannung umfasst,
und die zweite Lichtfunktion ganz oder teilweise von der zweiten sekundären Ausgangsspannung der Steuervorrichtung (100, 800, 900) versorgt wird, während die erste Lichtfunktion ganz oder teilweise von der ersten Ausgangsspannung versorgt wird, wenn der mindestens eine Schalter (S2, S3) zum Verbinden der ersten Lichtquellengruppe geschlossen wird und der Schalter (S1) zum Verbinden der zweiten Lichtquellengruppe geöffnet wird und die lineare Stromregelung (l1) die sekundären Ausgabemittel (126, 226, 326, 426, 426, 426, 526, 626, 726, 826, 926) mit der zweiten Lichtquellengruppe verbindet.

2. Beleuchtungsvorrichtung nach dem vorhergehenden Anspruch, **dadurch gekennzeichnet, dass** die sekundären Ausgangsmittel (126, 226, 326, 326, 326, 426, 526, 626, 726, 826, 826, 826, 926) der Steuervorrichtung (100, 800, 900) mehrere Gleichspannungen aus dem geschalteten Spannungssignal bereitstellen, wobei die Pegel dieser Ausgangsspannungen höher als der erste Spannungspegel sind.

3. Beleuchtungsvorrichtung nach einem der Ansprüche 1 bis 2, **dadurch gekennzeichnet, dass** das geschaltete Spannungssignal (114, 214, 314, 414, 514, 614, 714, 814, 914) zwischen zwei verschiedenen Spannungswerten wechselt.

4. Beleuchtungsvorrichtung nach Anspruch 3, **dadurch gekennzeichnet, dass** einer der beiden Spannungswerte Null ist.

5. Beleuchtungsvorrichtung nach einem der Ansprüche 1 bis 4, **dadurch gekennzeichnet, dass** die Wandlerschaltung ein schaltender Wandler ist, insbesondere eine Schaltung des Typs SEPIC, Flyback, Spannungsreduzierer (buck) oder Spannungsanhebung.

6. Beleuchtungsvorrichtung nach einem der vorstehenden Ansprüche, **dadurch gekennzeichnet, dass** die Lichtfunktionen die Positions- und Abblendfunktionen beinhalten.

7. Beleuchtungsvorrichtung nach einem der vorstehenden Ansprüche, **dadurch gekennzeichnet, dass** die Lichtquellen Leuchtdioden, LEDs, Leistungsdioden oder Laserdioden umfassen.

## Claims

1. Light device for motor vehicles comprising at least two groups of light sources producing at least two different light beams, comprising a device (100, 800, 900) for controlling the electrical supply of the at least two groups of light sources the light device (100, 800, 900) comprising
- a switching voltage converter circuit (110, 210, 310, 410, 510, 610, 710, 710, 810, 810, 910), said converter circuit comprising means (112, 212, 312, 412, 512, 612, 712, 812, 912) for generating a switched voltage signal (114, 214, 314, 414, 514, 614, 714, 814, 914) from a DC input voltage,
- primary output means (116, 216, 316, 316, 416, 516, 516, 616, 716, 816, 816, 916) for converting said switched voltage signal (114, 214, 314, 414, 514, 614, 714, 814, 914) into a first DC output voltage having a first voltage level and for supplying a first group of light sources,
- secondary output means (126, 226, 326, 326, 426, 526, 626, 726, 826, 826, 926) for converting said switched voltage signal (114, 214, 314, 414, 514, 614, 714, 814, 914) into at least one second DC output voltage having a second voltage level and for supplying a second light source group,
the secondary output means (126, 226, 326, 326, 426, 526, 626, 726, 826, 826, 926) include an electronic circuit including capacitors and diodes and which does not include a switching element and/or integrated circuit and/or microcontroller element,
the secondary output means (126, 226, 326, 326, 426, 526, 626, 726, 826, 826, 926) include linear means for regulating the output electrical current, formed by a linear current regulator (11) complementing the second output voltage,
the second voltage level is higher than the first voltage level,
the light device being **characterized in that** the first group of light sources, performing all or part of a first light function, is supplied by the first output voltage and **in that** the second group of light sources, performing all or part of a second light function, is supplied by the second output voltage of the control device,
**in that** it comprises at least one switch (S2, S3) for connecting the first light source group to the first output voltage and one switch (S1) for connecting the second light source group to the first output voltage,
and **in that** all or part of the second light function is supplied by the second secondary output voltage of the control device (100, 800, 900), while all or part of the first light function is supplied by the first output voltage when the at least one switch (S2, S3) for connecting the first light source group is closed and the switch (S1) for connecting the second light source group is opened and the linear current controller (11) connects the secondary output means (126, 226, 326, 426, 426, 526, 626, 726, 826, 926) to the second light source group.

2. Light device according to the previous claim, **characterized in that** the secondary output means (126, 226, 326, 326, 426, 526, 626, 726, 826, 826, 926) of the control device (100, 800, 900) provide several DC output voltages from the switched voltage signal, the levels of these output voltages being higher than the first voltage level.

3. Light device according to one of claims 1 to 2, **characterized in that** said switched voltage signal (114, 214, 314, 414, 514, 614, 714, 814, 914) alternates between two different voltage values.

4. Light device according to claim 3, **characterized in that** one of the two voltage values is zero.

5. Light device according to one of claims 1 to 4, **characterized in that** the converter circuit is a switching converter, in particular a circuit of the SEPIC, flyback, voltage reducer (buck) or voltage boost type.

6. Light device according to one of the above claims, **characterized in that** the light functions include the position and dipped beam functions.

7. Light device according to one of the above claims, **characterized in that** the light sources comprise light-emitting diodes, LEDs, power diodes, or laser diodes.
